# EUROPEAN PATENT SPECIFICATION

(11) **EP 3 424 669 B1**
(45) Date of publication and mention of the grant of the patent: **15.04.2020**
(21) Application number: 18181376.7
(22) Date of filing: 03.07.2018
(51) Int. Cl.: B29C 45/17, B29C 45/42, B29C 45/76, A24D 3/06

(54) **METHOD AND MANUFACTURING MACHINE FOR THE PRODUCTION OF CAPSULES FOR SMOKING ARTICLES, IN PARTICULAR FOR FILTERS, DESIGNED TO CONTAIN A LIQUID TO BE USED IN THE COOLING OF THE SMOKE**
VERFAHREN UND FERTIGUNGSMASCHINE ZUR HERSTELLUNG VON KAPSELN FÜR RAUCHARTIKEL, INSBESONDERE FÜR FILTER, DIE DAFÜR KONZIPIERT SIND, EINE FLÜSSIGKEIT ZUR KÜHLUNG DES RAUCHS AUFZUNEHMEN
PROCÉDÉ ET MACHINE DE FABRICATION POUR LA PRODUCTION DE CAPSULES POUR ARTICLES À FUMER, NOTAMMENT POUR FILTRES, CONÇUS POUR CONTENIR UN LIQUIDE DESTINÉ À ÊTRE UTILISÉ LORS DU REFROIDISSEMENT DE LA FUMÉE

(30) Priority: 03.07.2017 IT 201700074075
(43) Date of publication of application: 09.01.2019
(73) Proprietor: G.D SOCIETA' PER AZIONI, 40133 Bologna (IT)
(72) Inventor: MADERA, Giovanni, 40126 BOLOGNA (IT); PARAZZA, Davide, 40133 BOLOGNA (IT); MALDOTTI, Sergio, 44123 FERRARA (IT); TOMBA, Francesco, 40050 CASTENASO (BO) (IT); FEDERICI, Luca, 40135 BOLOGNA (IT)
(74) Representative: Musconi, Roberta

(56) References cited:
- EP-A1- 2 913 107
- EP-A1- 2 982 254
- JP-A- 2007 313 671
- US-A- 4 865 056
- US-A1- 2014 285 805

## Description

### TECHNICAL FIELD

The present invention relates to a method and to a manufacturing machine for the production of capsules for smoking articles, in particular for filters, designed to contain a liquid to be used in the cooling of the smoke.

### PRIOR ART

Recently, it has been proposed to use capsules for smoking articles, in particular for filters, designed to contain a liquid to be used in the cooling of the smoke.

In particular, the capsules are suitable for containing water or a mixture of water and a flavour.

Typically, said capsules comprise a cup-shaped body preferably made in one piece, for example made of a plastic material, defined by a tubular side wall and, at one end, by a circular shaped bottom wall or bottom element. The side wall has a longitudinal axis and delimits with the bottom wall a compartment which is adapted to contain a predetermined amount of liquid. The side wall can be provided with a plurality of ribs which extend in a cantilever fashion from the outer surface of the side wall, extend over the entire length of the side wall and are uniformly distributed around the longitudinal axis.

The bottom wall is connected at a given height of the side wall and the connection between the bottom wall and the inner surface of the side wall is made by means of a weakened profile so as to allow, in use, the breaking under the action of a force imparted from the outside to pour out the liquid contained inside the compartment.

Finally, the compartment is open at the top and is closed by a lid conveniently formed by a film or wrap made of PET/PE. The capsule can furthermore comprise a collar i.e. an annular flange which extends in a cantilever fashion from the end of the side wall opposite the bottom wall and is arranged on a plane which is approximately orthogonal to said longitudinal axis.

Alternatively, capsules are known which comprise a cup-shaped body preferably made in one piece, for example made of plastic material, defined by a tubular side wall and, at one end, by a bottom element having a polygonal shaped central portion, for example hexagonal. The cup-shaped body has a slightly tapered shape towards the bottom element. The side wall has a longitudinal axis and delimits with the bottom element a compartment which is adapted to contain a predetermined amount of liquid. The side wall has a polygonal shape in plan; in particular, the side wall has a hexagonal shape in plan, in which six side wall portions are connected to one another by means of six connecting sections. The connecting sections are internally weakened so as to allow, in use, to deform and collapse under the action of a force imparted from the outside by the user to pour out the liquid contained inside the compartment. The compartment is open at the top and is closed by a lid conveniently formed by a film or wrap made of PET/PE. The capsule further comprises a collar i.e. an annular flange which extends in a cantilever fashion from the end of the side wall opposite the bottom wall and is arranged on a plane which is approximately perpendicular to said longitudinal axis.

Capsules for smoking articles, of the type described above, have reduced dimensions of the order of one centimetre. Typically, said capsules are produced by a manufacturing machine in which the capsules travel through a forming path through a moulding station for the cup-shaped bodies, a control station for the cup-shaped bodies which are obtained by moulding, a filling station with the liquid and a subsequent one for shearing and sealing of the covering element to the cup-shaped body.

Manufacturing machines for moulded containers are known, for example, from JP-A-2007313671 and US-A-4865056. In particular, JP-A-2007313671 discloses a device for testing a molded container which can save its installation space and a method for testing the molded container which can save a space necessary for testing the molded container. The first testing part is installed in the neighborhood of a place where the molded container is transferred from an extraction machine in a conveyance part. When the molded container is transferred from the extraction machine to the conveyance part , the first testing part photographs the inner surface of the molded container to check the inner surface. The second testing part, which tests the edge part of the molded container when the molded container is conveyed to a storage stand by a conveyance part.

Within the production process, it is extremely important to be able to check both the conformity of the collars of the individual capsules to avoid compromising the subsequent sealing step of the covering element to the collar itself and the presence of any plastic material strands protruding from the bottom edge of the side wall, residues of the moulding step. However, at the moment, given the very small size of the capsules, it is not possible to carry out these checks satisfactorily.

### DESCRIPTION OF THE INVENTION

The object of the present invention is to provide a manufacturing machine for the production of capsules for smoking articles, in particular for filters, designed to contain a liquid to be used in the cooling of the smoke which, is free from the drawbacks of the state of the art and is, at the same time, simple and inexpensive to implement.

Another object of the present invention is to provide a method for the production of capsules for smoking articles, in particular for filters, designed to contain a liquid to be used in the cooling of the smoke which is free from the drawbacks of the state of the art and is, at the same time, simple and inexpensive to implement.

According to the present invention, methods and manufacturing machines are provided for the production of capsules for smoking articles, in particular for filters, designed to contain a liquid to be used in the cooling of the smoke, as claimed in the appended claims.

### BRIEF DESCRIPTION OF THE DRAWINGS

The present invention will now be described with reference to the attached drawings, which illustrate some non-limiting embodiments thereof, wherein:
- Figures 1a to 1c respectively illustrate a perspective view, a bottom view and a section view along the line c-c of a capsule made by the manufacturing machine which is the object of the present invention;
- Figure 2 and Figure 3 are perspective views of a manufacturing machine made according to the present invention;
- Figure 4 is a further perspective view and with parts removed for clarity of the manufacturing machine of Figure 2;
- Figure 5 is a rear view of the manufacturing machine of Figure 2;
- Figure 6 is an enlarged view and with parts removed for clarity of a detail of Figure 5;
- Figure 7 is a rear view of a first support member of the manufacturing machine of Figure 2 in a first operating configuration;
- Figure 8 is a front view of the support member in the first operating configuration of Figure 7;
- Figure 9 schematically illustrates the arrangement of the seats obtained in a second support member of the manufacturing machine of Figure 2;
- Figure 10 schematically illustrates the arrangement of the seats obtained in the first support member of the manufacturing machine of Figure 2 in a second operating configuration; and
- Figures 11 to 14 illustrate in sequence the steps of filling a tray with the semi-finished capsules of Figure 1.

### PREFERRED EMBODIMENTS OF THE INVENTION

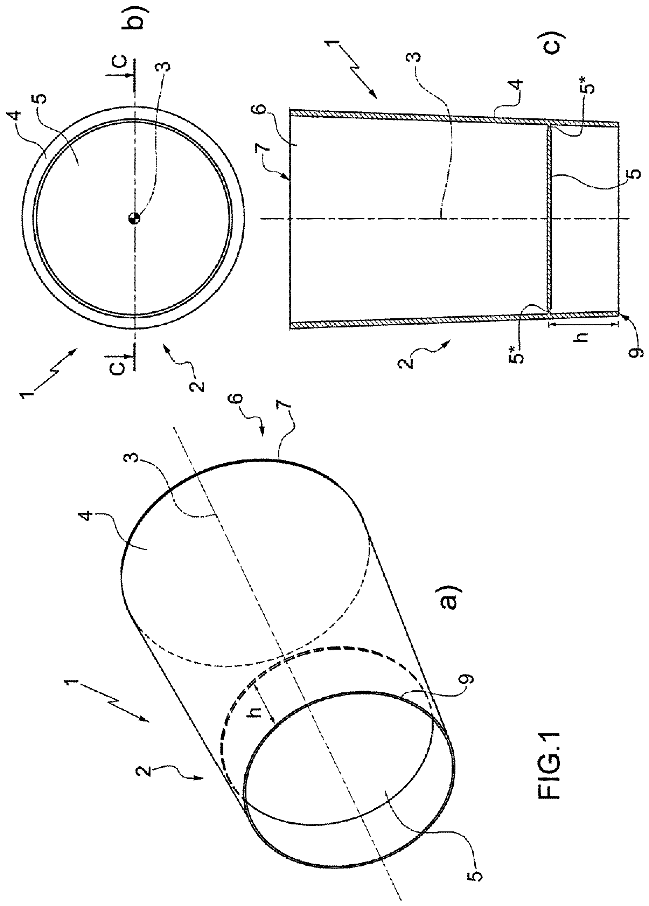

In Figure 1, number 1 denotes as a whole a capsule 1 for smoking articles, in particular for filters, designed to contain a liquid to be used in the cooling of the smoke. In particular, the capsule 1 is suitable for containing water or a mixture of water and a flavour.

The capsule 1 comprises a cup-shaped body 2 preferably made in one piece, for example made of a plastic material, defined by a tubular side wall 4 and, at one end, by a circular shaped bottom wall 5 or bottom element. The cup-shaped body 2 has a shape that tapers slightly towards the bottom wall 5. Alternatively, the cup-shaped body 2 has a substantially cylindrical shape. The side wall 4 has a longitudinal axis 3 and delimits, with the bottom wall 5, a compartment 6, which is adapted to contain a predetermined amount of liquid. The side wall 4 has a circular shape in plan. According to a preferred variant, the side wall 4 is provided with a plurality of ribs (not illustrated) which extend in a cantilever fashion from the outer surface of the side wall 4, extend over the entire length of the side wall 4 and are uniformly distributed around the longitudinal axis 3.

According to what is better illustrated in Figure 1c, the bottom wall 5 is connected at a height h of the side wall 4. In other words, the bottom wall 5 is not arranged flush with the lower edge 9 of the side wall 4 but fits at a height h with respect to said lower edge 9.

The connection between the bottom wall 5 and the inner surface of the side wall 4 is obtained by means of a weakened profile 5* (of reduced thickness) to allow, in use, the breakage under the action of a force imparted from the outside in order to pour the liquid contained inside the compartment 6. The compartment 6 is open at the top and is closed by a lid 7 conveniently formed by a film or wrap made of PET/PE. The capsule 1 comprises, furthermore, a collar defined by the upper surface of the side wall 4 to which the lid 7 is connected. Alternatively, the capsule 1 comprises a collar defined by an annular flange (not illustrated), which extends in a cantilever fashion from the end of the side wall 4 opposite the bottom wall 5 and is arranged on a plane approximately orthogonal to said longitudinal axis 3.

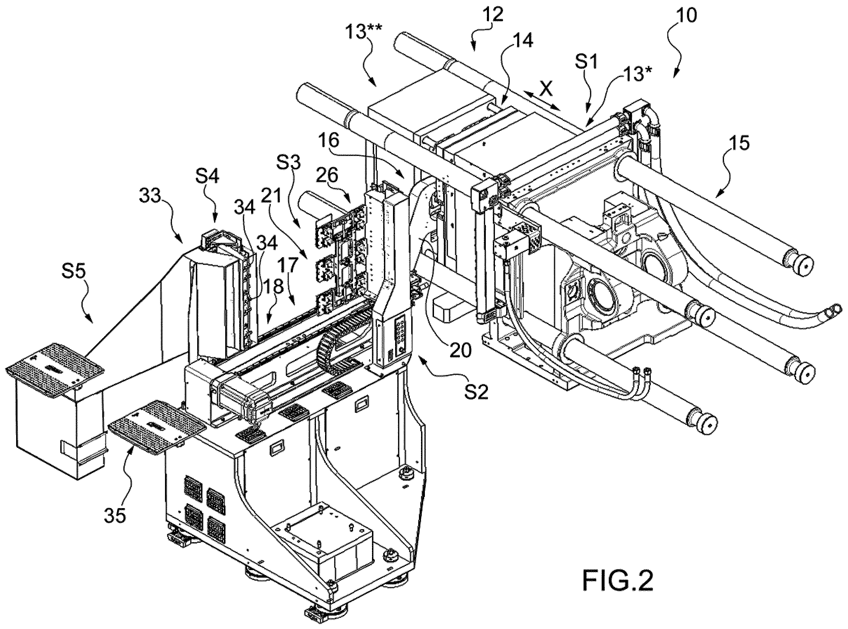

In Figure 2 number 10 denotes as a whole a manufacturing machine for the production of the capsules 1 for smoking articles described above. The capsules 1 travel along a forming path through a moulding station S1 of the semi-finished capsules 1, and in particular of the cup-shaped bodies 2, a check and control station S2 for the collars, a transfer station S3 for the cup-shaped bodies 2, a further check and control station S4 for checking the presence of any strands of plastic material protruding from the lower edge 9 of the side wall 4, residues of the moulding step, a transfer station S5 for transferring the cup-shaped bodies 2 into trays, a station filling (not illustrated) with the liquid, and a shearing and sealing station (not illustrated) for the covering elements 7 to the respective cup-shaped bodies 2.

The moulding station S1 of the capsules 1 is provided with a vertical mould 12 adapted to be fitted on a moulding machine (not illustrated in detail) made preferably by, but not necessarily, two parallelepiped-shaped shells 13, which are fitted in use, facing each other on a framework of the moulding machine to move from and towards a closed moulding position, wherein the two shells 13 define a moulding chamber 14 between one another.

The moulding station S1 then comprises a handling press 15 for moving the shells 13, which supports the two shells 13, and is structured so as to be able to bring, on command, the same shells 13 in abutment against one another so as to form, cyclically, the cup-shaped bodies 2.

At the end of the moulding step, the two shells 13 are moved away from one another and a support member 16 for the cup-shaped bodies 2 is inserted between them, which is made to hold and transfer the cup-shaped bodies 2. Preferably, the shell 13* acts as a movable male half-mould whereas the shell 13** acts as a fixed female half-mould. The male half-mould 13* or punch is movable relative to the female half-mould 13** or die in a coupling direction X and is suitable for being set in abutment against the female half-mould 13**; the two half-moulds 13** and 13* are shaped so as to form, between the respective contact surfaces, a plurality of closed impressions which reproduce in negative the shape of the cup-shaped bodies 2 to be made, in particular ninety-six closed impressions. The cup-shaped bodies 2 obtained at the end of the moulding step have the longitudinal axis 3 parallel to the coupling direction X.

Finally, the moulding station S1 comprises a feed line for the plastic material (not illustrated) obtained partially in the shell 13** which is adapted to receive, as input, a more or less continuous flow of granular plastic material, to liquefy said granular plastic material, and, finally, to feed the plastic material in a liquid state to the moulding chamber 14 which is formed at the centre of the mould 12 subsequent to the coupling of the two shells 13 by means of the nozzles.

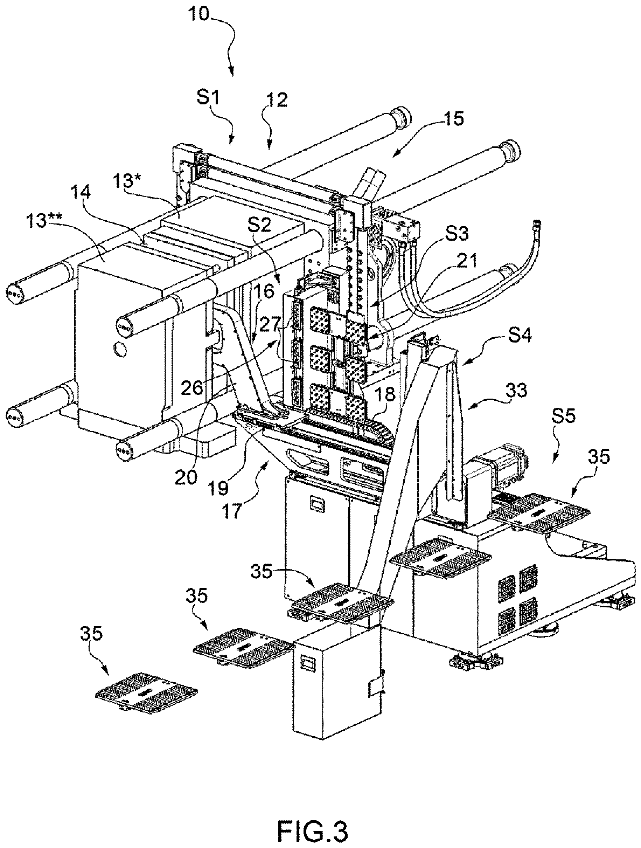

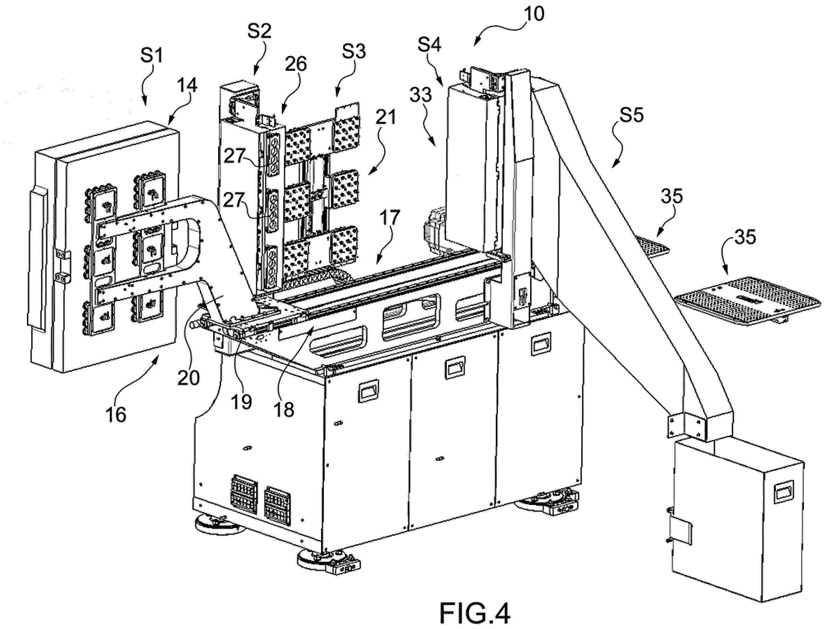

According to what is better illustrated in Figures 3 and 4, the manufacturing machine 10 comprises a handling system 17 for the support member 16 which develops along a straight path; in which the processing stations S1 to S5 are arranged along said handling system 17.

The handling system 17 comprises a transport conveyor 18 which comprises a single slide 19 supporting the support member 16 to which it is connected with the interposition of a bracket 20. The conveyor 18 moves the slide 19 along the straight path between two extreme positions; in particular, a first extreme position corresponds to a moulding position in which the support member 16 is inserted inside the mould 12 whereas a second extreme position corresponds to a transfer position of the cup-shaped bodies 2 to a support member 21.

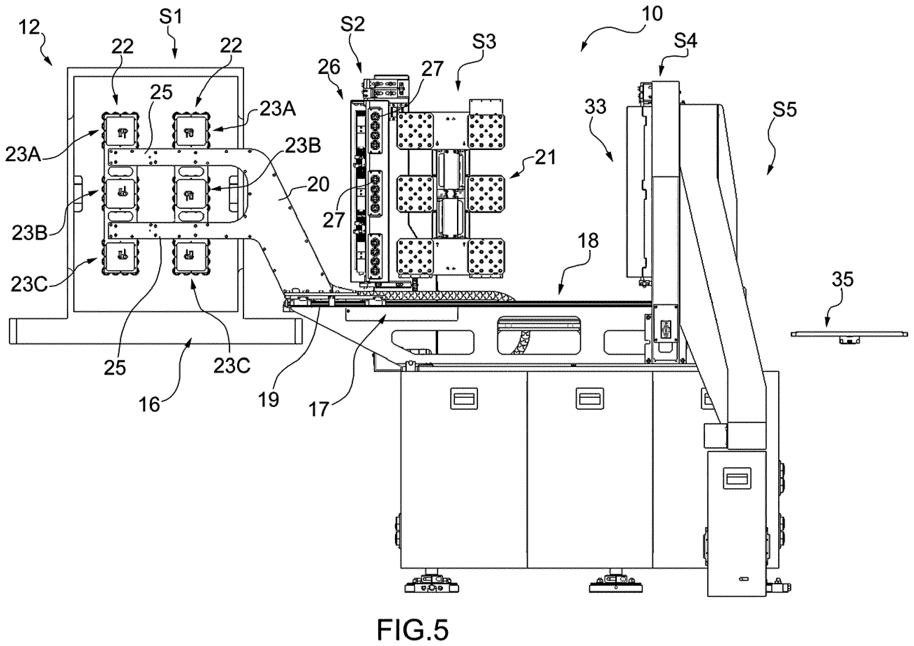

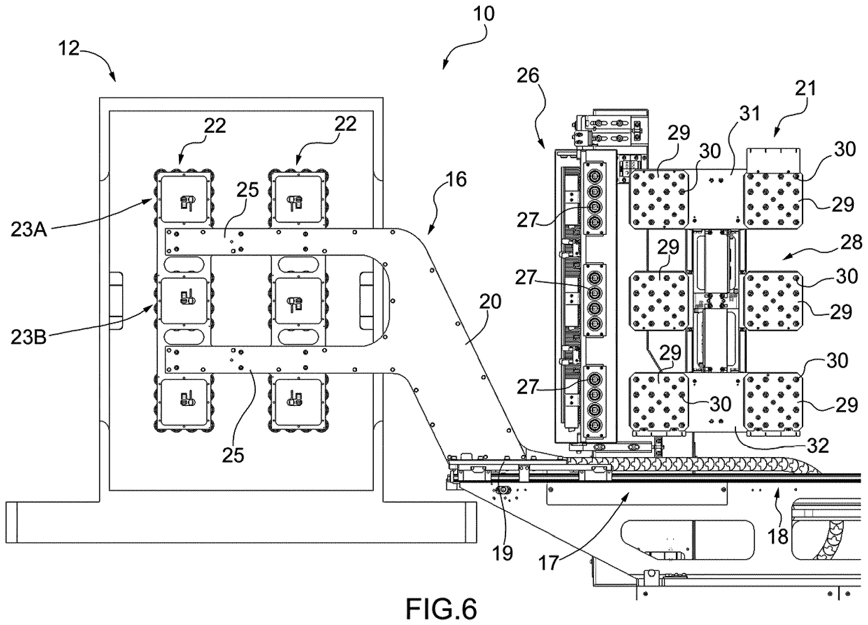

According to what is better illustrated in Figures 5 and 6, the support member 16 is formed by means of a pair of plates 22 arranged side by side; to each of said plates 22 three capsule-carrier elements 23 are connected, having a substantially square shape in plan. According to a variant, the support member 16 is defined by an individual plate 22 having an H-shape to which six capsule-carrier elements 23 are connected, having a substantially square shape in plan.

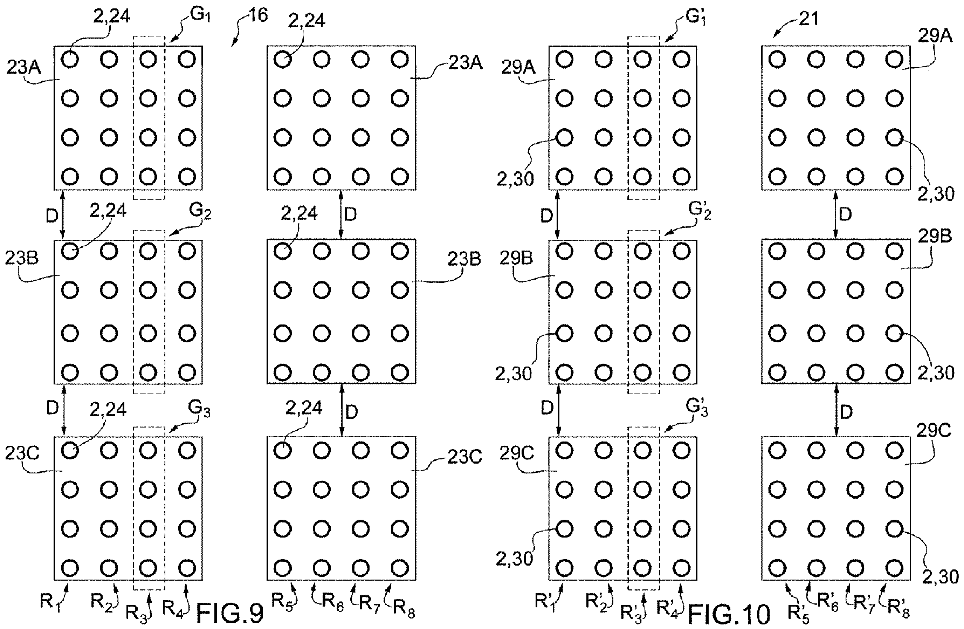

Each capsule-carrier element 23 is designed to house a given number of cup-shaped bodies 2 in respective seats 24 which are equidistant and uniformly distributed on the available surface of the capsule-carrier element 23. The arrangement of the seats 24 / cup-shaped bodies 2 on the support member 16 is schematically illustrated in Figure 9. In particular, each capsule-carrier element 23 is designed to house sixteen cup-shaped bodies 2 in as many seats 24 arranged on four rows and four lines equidistant from each other. The three capsule-carrier elements 23 are arranged at the ends and the central area of a front face of the respective plate 22. The three capsule-carrier elements 23 are uniformly distributed along the entire length of the respective plate 22 and are arranged at a distance D from one another. In other words, the central capsule-carrier element 23B is equidistant from each of the two peripheral capsule-carrier elements 23A, 23C. Moreover, the rear face of both plates 22 is connected to two arms 25 of the bracket 20 at the free areas between two capsule-carrier elements 23. In other words, each arm 25 is interposed between two capsule-carrier elements 23. Basically, according to what is schematically illustrated in Figure 9, the support member 16 carries eight rows R₁-R₈ of twelve cup-shaped bodies 2 divided into three groups G₁-G₃ arranged at a distance D from one another of four cup-shaped bodies 2 each. It should be pointed out that the nozzles arranged on the shell 13** have an arrangement that mirrors the arrangement of the seats 24.

According to a preferred variant, the support member 16 has an air sucking and blowing device provided with a pump (not illustrated) which is connected to each seat 24 through a respective duct so as to place each seat 24 in communication with the pump at the end of the moulding step, during the control and transfer step in order to improve the holding of the cup-shaped bodies 2 inside the respective seats 24 and the transferring of the same.

At the end of the moulding step, the two shells 13 are opened, the suction system of the support member 16 is activated, the cup-shaped bodies 2 are withdrawn and held by the support member 16 and the slide 19 is controlled up to transit at the control station S2. The cup-shaped bodies 2 are transferred from the moulding station S1 to the control station S2. In particular, the cup-shaped bodies 2 are translated in a direction orthogonal to their longitudinal axis 3 in the movement from the moulding station S1 to the control station S2.

The station S2 comprises an optical control device 26 which checks the conformity of the collars to avoid compromising the subsequent sealing step of the covering element 7 to the collar itself. In particular, the optical control device 26 comprises a number of optical control devices 27 (for example a CCD camera) arranged in succession for carrying out, in parallel, the checking on a given number of cup-shaped bodies 2. Even more in detail, the optical control device 26 is made by means of a row of twelve optical control devices 27 divided into three equidistant groups of four optical control devices each. In essence, the arrangement of the control devices 27 reproduces the arrangement of the seats 24 of each of the rows R₁-R₈. In this way it is possible to carry out a simultaneous check on the cup-shaped bodies of a same row R₁-R₈. The slide 19 moves further towards the transfer station S3, which is arranged downstream of the control station S2, thus allowing the optical control device 26 to carry out in succession the checking on the eight rows R₁-R₈ of cup-shaped bodies 2.

The slide 19 is controlled until it stops at the transfer station S3. In particular, the support member 16 stops in a position directly facing the support member 21 of the cup-shaped bodies 2. The transfer station S3 provides a movement arm (of a known type and not illustrated) connected to the support member 21.

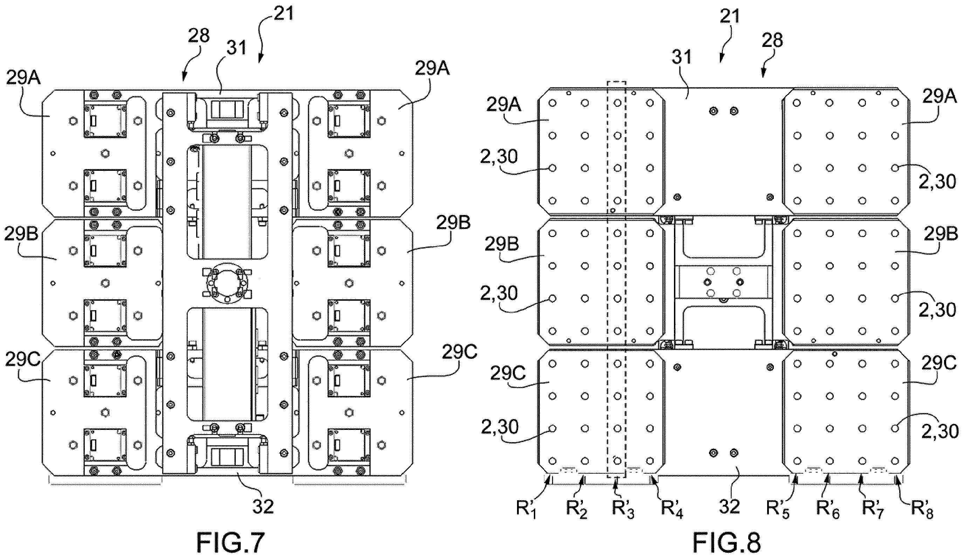

According to what is better illustrated in the figures, the support member 21 is formed by means of a frame 28 to which six capsule-carrier elements 29 are connected, arranged on two rows of three capsule-carrier elements 29 each and having a substantially square shape in plan. Each capsule-carrier element 29 is designed to house a given number of cup-shaped bodies 2 in respective seats 30 which are equidistant from one another and uniformly distributed on the available surface of the capsule-carrier element 29. In particular, each capsule-carrier element 29 is designed to house sixteen cup-shaped bodies 2 arranged on four rows and four lines equidistant from each other. The central capsule-carrier elements 29B of each row are fixed to a front surface of the frame 28. The upper capsule-carrier elements 29A of each row are fixed to a common plate 31 connected to the frame 28 and, in a completely similar manner, the lower capsule-carrier elements 29C of each row are fixed to a common plate 32 connected to the frame 28. The two plates denoted with 31 and 32 are movable along the frame 28 between a first position (illustrated in Figures 6 and 10) in which they are arranged at the respective ends of the frame 28 itself and a second position (illustrated in Figures 7 and 8) in which they are arranged close to the central capsule-carrier elements 29B, and vice-versa.

According to a preferred alternative, the capsule-carrier elements 29 are provided with adjustable limit stop elements (not illustrated, of a known type and not described in detail) so as to be arranged, in the second position, at a given distance from one another.

In the first position schematically illustrated in Figure 10, the three capsule-carrier elements 29 of each row are uniformly distributed along the frame 28 and arranged at a distance D, other than zero, from one another (the capsule-carrier elements 29 can be provided with adjustable limit stop elements so as to be arranged at said distance D). In other words, the central capsule-carrier element 29B is equidistant from each of the two peripheral capsule-carrier elements 29A, 29C. Substantially, in the first position, the support member 21 carries eight rows R'₁-R'₈ of twelve cup-shaped bodies 2 divided into three groups G'₁-G'₃ arranged at a distance D from one another of four cup-shaped bodies 2 each. It is important to underline that, in the first position, the arrangement of the seats 30 mirrors the arrangement of the seats 24 in the support member 16.

In the second position illustrated in Figure 8, the three capsule-carrier elements 29 of each row are arranged close relative to the first position, so as to obtain eight rows R'₁-R'₈ of twelve cup-shaped bodies 2 arranged in succession and substantially equidistant from each other. Ultimately, the ninety-six cup-shaped bodies 2 are divided into two groups of forty-eight cup-shaped bodies 2 each, equidistant from each other.

According to a preferred alternative, the support member 21 has an air sucking and blowing device provided with a pump (not illustrated) which is connected to each seat 30 through a respective duct so as to place each seat 30 in communication with the pump during the control and transfer step in order to provide, by suction, the holding of the cup-shaped bodies inside the respective seats 30.

When the support member 16 stops at the transfer station S3 in the position directly facing the support member 21, the two plates 31 and 32 are in the first position. The movement arm moves the support member 21 closer to the support member 16, the suction system of the support member 16 is deactivated and, at the same time, the suction system of the support member 21 is activated so as to allow the transfer of the cup-shaped bodies 2 from the seats 24 to the corresponding seats 30. According to a preferred alternative, the blowing system of the support member 16 is activated in order to facilitate the passage of the cup-shaped bodies 2 from the seats 24 to the seats 30 to which they are directly facing. In the transfer from the support member 16 to the support member 21, the cup-shaped bodies 2 are moved along the respective longitudinal axis 3. The cup-shaped bodies 2 are transferred from the support member 16 to the support member 21, feeding them in a direction substantially parallel to their longitudinal axis 3.

In other words again, in the transfer from the support member 16 to the support member 21, the cup-shaped bodies 2 are translated along their longitudinal axis 3 so that, when the cup-shaped bodies 2 are contained inside the seats 30, the respective bottom walls 5 are visible and can be inspected, contrary to what happened when the cup-shaped bodies 2 were housed inside the seats 24, in which collars were visible. Subsequently, the slide 19 is controlled until it passes again at the moulding station S1 to start a new cycle.

The cup-shaped bodies 2 are then transferred from the transfer station S3 to the control station S4. In particular, the cup-shaped bodies 2 are translated in a direction orthogonal to their longitudinal axis 3 in the movement from the transfer station S3 to the control station S4.

The control station S4 and the control station S2 are on opposite sides of the handling system 17.

The control station S4 comprises an optical control device 33 which checks the conformity of the terminal end of the side wall 4 in order to avoid the undesirable presence of plastic material strands protruding from the lower edge 9 of the side wall 4 and being residues of the moulding step. In particular, the optical control device 33 comprises a number of optical control devices 34 (for example a CCD camera) arranged in succession for carrying out, in parallel, the checking on a given number of cup-shaped bodies 2. According to a preferred variant, the optical control device 33 comprises a number of optical control devices 34 which is equal to half the number of cup-shaped bodies 2 aligned in each row R'₁-R'₈. Even more in detail, the optical control device 33 is made by means of a row of six optical control devices 34 divided into three, equidistant, groups of two optical control devices 34 each. Each optical device 34 directly faces the support member 21, is interposed between two cup-shaped bodies 2 arranged in succession and cooperates with two reflecting elements (typically a pair of mirrors) which reflect the image of said two cup-shaped bodies 2 to check the presence of plastic material strands protruding from the lower edge 9 of the side wall 4, residues of the moulding step. In this way it is possible to carry out a simultaneous check on all the cup-shaped bodies of a same row R'₁-R'₈. The translation movement of the arm (and, therefore, of the support member 21) allows the control station S4 to carry out in succession the check on the eight rows R'₁-R'₈ of cup-shaped bodies 2.

Alternatively, the optical control device 33 can comprise a number of optical control devices 34 which is equal to the number of cup-shaped bodies 2 aligned in each row R'₁-R'₈. The arrangement of the control devices 34 reproduces the arrangement of the seats 30 in each row R'₁-R'₈ for carrying out the simultaneous verification on all the cup-shaped bodies 2 of a same row R'₁-R'₈.

Once the step of checking the presence of plastic material strands protruding from the lower edge 9 of the side wall 4 is completed, the two plates 31 and 32 are actuated to move from the first position to the second position in which they are arranged close to the central capsule-carrier elements 29B.

Furthermore, once the step of checking for the presence of plastic material strands protruding from the lower edge 9 of the side wall 4 is completed, for those seats 30 which house cup-shaped bodies 2 that were not compliant, the suction is deactivated and the blowing device is activated in order to achieve a selective discarding of only non-compliant cup-shaped bodies 2 that did not pass the control steps.

Upon leaving the control station S4, the arm first changes the orientation of the individual cup-shaped bodies (by a 90° rotation) and then delivers the cup-shaped bodies 2 to trays 35 fed on a conveyor (not illustrated) up to a subsequent filling station with the liquid.

According to what is schematically illustrated in Figures from 11 to 14, the trays 35 have a plurality of seats 36 each designed to receive and house a respective cup-shaped body 2; the seats 36 are typically divided into several rows 37 divided into two groups 38*, 38** equal to one another. In particular, in each tray 35 a number of seats 36 are obtained, which is equal to a multiple k of the number of seats 30 of the support member 21. In particular, in each tray 35 a number of seats 36 are obtained, which is equal to four times the capacity of the support member 21 (that is, 384 seats) divided into two equal groups 38*, 38** of 192 seats arranged on twenty-four lines and eight rows 37. To allow the tray 35 to be filled, the arm must therefore complete four picking and transferring cycles of the cup-shaped bodies 2.

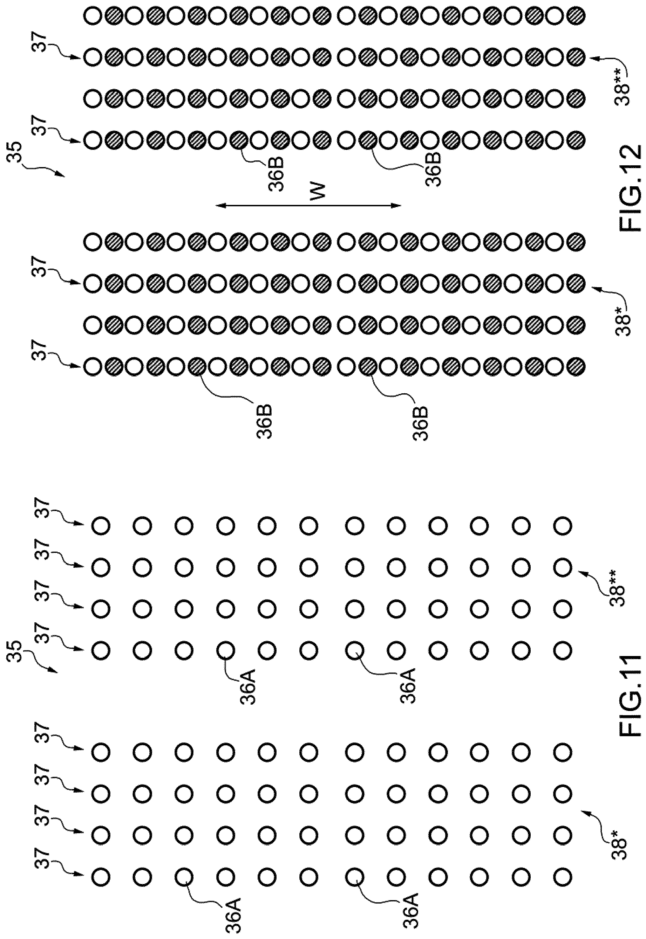

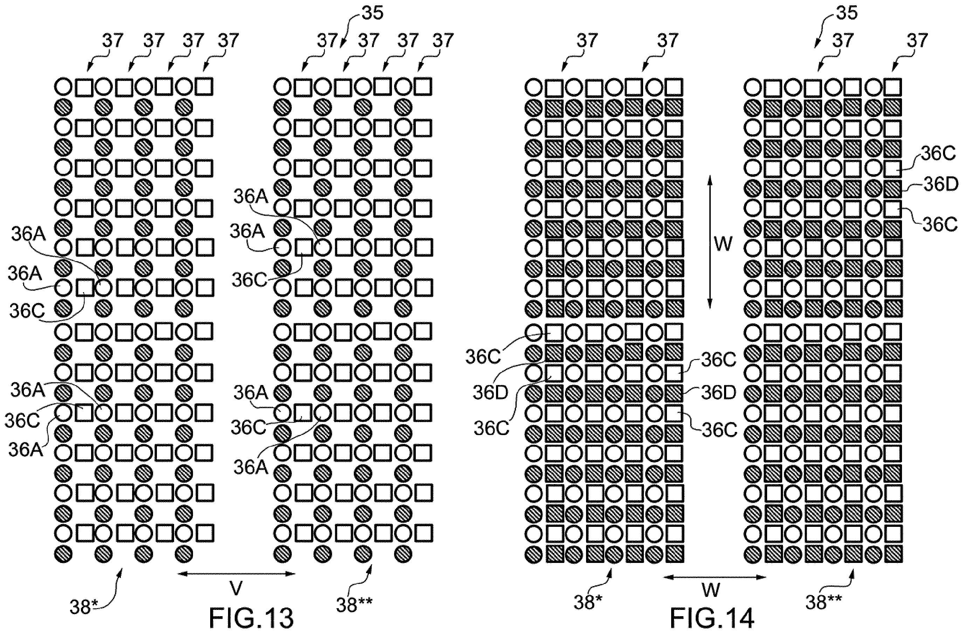

The filling sequence is as follows:
- in the first cycle (illustrated in Figure 11) the seats denoted with 36A are filled;
- in the second cycle (illustrated in Figure 12) the seats denoted with 36B are filled, wherein each of the seats 36B is interposed between two seats 36A along a first direction W;
- in the third cycle (illustrated in Figure 13) the seats denoted with 36C are filled, wherein each of the seats 36C is interposed between two seats 36A along a second direction V orthogonal to the first direction W; and
- finally, in the fourth cycle (illustrated in Figure 14) the seats denoted with 36D are filled, wherein each seat 36D is interposed between two seats 36C along the first direction W so as to obtain two groupings 38 of eight rows 37 of twenty-four seats 36 each.

It is clear that alternative filling sequences to the one just described can be provided, such as for example:
- in the first cycle the seats denoted with 36A are filled;
- in the second cycle the seats denoted with 36B are filled, wherein each of the seats 36B is interposed between two seats 36A along the second direction V;
- in the third cycle the seats denoted with 36C are filled, wherein each of the seats 36C is interposed between two seats 36A along the first direction W orthogonal to the second direction V; and
- in the third cycle the seats denoted with 36D are filled wherein each seat 36D is interposed between two seats 36C along the first direction W so as to obtain two groupings 38 of eight rows 37 of twenty-four seats 36 each.
   It is important to underline that, at the end of the filling sequence, the spacing between two adjacent cup-shaped bodies 2 in the tray 35 is halved both in the direction W and in the direction V with respect to the distance between two cup-shaped bodies 2 side by side in the support member 21.

According to an alternative embodiment, the female half-mould or die is defined by the shell 13* and the male half-mould or punch is defined by the shell 13**. According to this variant, in the station S2 the presence of any plastic material strands is checked, which are protruding from the lower edge 9 of the side wall 4, residues of the moulding step, and, in the station S4 the conformity of the collars is checked, in order to avoid compromising the subsequent sealing step of the covering element 7 to the collar itself.

The manufacturing machine 10 described up to now has various advantages. In particular, it allows to adapt the distance between the cup-shaped bodies according to the different working stations S1, S2, S3, S4, S5. In particular, where necessary (moulding station S1 and control stations S2, S4) the spacing between adjacent cup-shaped bodies 2 is doubled both in the direction W and in the direction V with respect to the distance between two cup-shaped bodies 2 arranged side by side in the tray 35 used in the subsequent filling station with the liquid, in which a compact configuration is required. Furthermore, the manufacturing machine 10 allows both to check the conformity of the collars of the individual cup-shaped bodies 2, in order to avoid compromising the subsequent sealing step of the covering element 7 to the collar itself, and to check any undesired presence of plastic material strands protruding from the lower edge 9 of the side wall 4, residues of the moulding step.

## Claims

1. A manufacturing machine (10) for the production of capsules (1) for smoking articles, in particular for filters, designed to contain a liquid to be used in the cooling of the smoke; wherein each capsule (1) comprises a cup-shaped body (2), which is defined by a side wall (4) and, at one end, by a bottom wall (5); the side wall (4) has a longitudinal axis (3) and delimits, with the bottom wall (5), a compartment (6), which is suitable for containing a predetermined amount of liquid; the capsule (1) comprising a portion of the side wall (4) at the end opposite the bottom wall (5), which defines a collar; the manufacturing machine (10) comprises:
- a moulding station (S1) for the cup-shaped bodies (2);
- a first control station (S2), which is arranged downstream of the moulding station (S1) to check the conformity of the collar or of the terminal end of the side wall (4) opposite the collar;
- a first transfer station (S3) for the cup-shaped bodies (2) arranged downstream of the first control station (S2), where the cup-shaped bodies (2) are translated along their longitudinal axis (3) so as to allow a second portion of the cup-shaped body (2) to be inspected; and
- a second control station (S4), which is arranged downstream of the transfer station (S3) to check the conformity of the collar or of the terminal end of the side wall (4) opposite the collar.

2. The machine according to claim 1 and comprising a first support member (16) for a plurality of cup-shaped bodies (2), which transfers the cup-shaped bodies (2) from the moulding station (S1) to the first control station (S2) by translating them along a direction that is substantially orthogonal to their longitudinal axis (3).

3. The machine according to one of the preceding claims and comprising a second support member (21) for a plurality of cup-shaped bodies (2), which transfers the cup-shaped bodies (2) from the first transfer station (S3) to the second control station (S4) by translating them in a direction substantially orthogonal to their longitudinal axis (3).

4. The machine according to claim 3, wherein the second support member (21) comprises an air sucking and blowing device; wherein the blowing circuit is activated downstream of the second control station (S4) to obtain a selective rejection of the cup-shaped bodies (2) that were not compliant.

5. The machine according to claims 2 and 3, wherein the first support member (16) transfers the cup-shaped bodies (2) to the second support member (21) in the area of the first transfer station (S3) feeding them in a direction substantially parallel to their longitudinal axis (3).

6. The machine according to one of the preceding claims and comprising a second transfer station (S5), which is arranged downstream of the second control station (S4) and comprises an arm, which changes the orientation of the single cup-shaped bodies (2) rotating them by 90° and subsequently transfers them into trays (35) fed on a conveyor.

7. The machine according to one of the preceding claims, when dependent on claim 2, and comprising a moving system (17) for the support member (16), which develops along a straight path and comprises a transport conveyor (18), which moves the support member (16) between two extreme positions; wherein, a first extreme position is in the area of the moulding station (S1) and a second extreme position is in the area of the first transfer station (S3).

8. The machine according to claim 7, wherein the first control station (S2) and the second control station (S4) are arranged along said moving system (17), on opposite sides of said moving system (17).

9. The machine according to one of the preceding claims when dependent on claim 2, wherein the first support member (16) supports a plurality of cup-shaped bodies (2) arranged in several rows (R₁-R₈); wherein the first control station (S2) comprises an optical control device (26) provided with a number of optical devices (27), which are aligned so as to simultaneously carry out the control of all the cup-shaped bodies (2) of a same row (R₁-R₈).

10. The machine according to one of the preceding claims, when dependent on claim 3, wherein the second support member (21) supports a plurality of cup-shaped bodies (2) arranged in several rows (R'₁-R'₈); wherein the second control station (S4) comprises an optical control device (33) provided with a number of optical devices (34), which are aligned so as to simultaneously carry out the control of all the cup-shaped bodies (2) of a same row (R'₁-R'₈).

11. The machine according to claim 10, wherein the number of optical devices (34) is half the number of the cup-shaped bodies (2) which make up each row (R'₁-R'₈); and wherein each optical device (34) directly faces the second support member (21), it is interposed between two cup-shaped bodies (2) arranged in succession and cooperates with two reflecting elements, in particular two mirrors, so as to simultaneously carry out the control of both said cup-shaped bodies (2) arranged in succession.

12. A method for the production of capsules (1) for smoking articles, in particular for filters, designed to contain a liquid to be used in the cooling of the smoke; wherein each capsule (1) comprises a cup-shaped body (2), which is defined by a side wall (4) and, at one end, by a bottom wall (5); the side wall (4) has a longitudinal axis (3) and delimits, with the bottom wall (5), a compartment (6), which is suitable for containing a predetermined amount of liquid; the capsule (1) comprising a portion of the side wall (4) in the area of the end opposite the bottom wall (5) which defines a collar; the method provides in sequence:
- a moulding step to mould the cup-shaped bodies (2);
- a first control step to check the conformity of the collar or of the terminal end of the side wall (4) opposite the collar;
- a first transfer step to transfer the cup-shaped bodies (2), wherein the cup-shaped bodies (2) are translated along their longitudinal axis (3) so as to allow a second portion of the cup-shaped body (2) to be inspected; and
- a second control step to check the conformity of the terminal end of the side wall (4) opposite to the collar or of the collar.

13. The method according to claim 12 and comprising the further step of transferring the cup-shaped bodies (2), feeding them in a direction that is substantially orthogonal to their longitudinal axis (3), between the moulding step of the cup-shaped bodies (2) and the first control step.

14. The method according to claim 12 or 13 and comprising the further step of transferring the cup-shaped bodies (2), feeding them in a direction that is substantially parallel to their longitudinal axis (3), during the first transfer step.

15. The method according to any one of the claims from 12 to 14 and comprising the further step of transferring the cup-shaped bodies (2), feeding them in a direction substantially orthogonal to their longitudinal axis (3) between the first transfer step and the second control step.

16. The method according to any one of the claims from 12 to 15 and comprising the further steps, subsequent to the second control step, of transferring the cup-shaped bodies (2) rotating them by 90° and of transferring them into trays (35) fed by a conveyor.

17. The method according to any one of the claims from 12 to 16 and comprising the further step, subsequent to the second control step, of obtaining a selective rejection of non-compliant cup-shaped bodies (2).

## Patentansprüche

1. Herstellungsmaschine (10) für die Produktion von Kapseln (1) für Raucherzeugnisse, insbesondere für Filter, die ausgelegt sind, eine Flüssigkeit zu enthalten, die beim Kühlen des Rauchs verwendet werden soll; wobei jede Kapsel (1) einen becherförmigen Körper (2) umfasst, der durch eine Seitenwand (4) und an einem Ende durch eine Bodenwand (5) definiert ist; wobei die Seitenwand (4) eine Längsachse (3) aufweist und mit der Bodenwand (5) ein Fach (6) begrenzt, das zum Enthalten einer vorgegebenen Menge an Flüssigkeit geeignet ist; wobei die Kapsel (1) einen Abschnitt der Seitenwand (4) an dem Ende gegenüber der Bodenwand (5) umfasst, der einen Kragen definiert; wobei die Herstellungsmaschine (10) umfasst:
- eine Gießstation (S1) für die becherförmigen Körper (2);
- eine erste Kontrollstation (S2), die stromabwärts der Gießstation (S1) angeordnet ist, um die Konformität des Kragens oder des Abschlussendes der Seitenwand (4) gegenüber dem Kragen zu prüfen;
- eine erste Übergabestation (S3) für die becherförmigen Körper (2), die stromabwärts der ersten Kontrollstation (S2) angeordnet ist, an der die becherförmigen Körper (2) entlang ihrer Längsachse (3) translatorisch bewegt werden, um zu ermöglichen, dass ein zweiter Abschnitt des becherförmigen Körpers (2) geprüft wird; und
- eine zweite Kontrollstation (S4), die stromabwärts der Übergabestation (S3) angeordnet ist, um die Konformität des Kragens oder des Abschlussendes der Seitenwand (4) gegenüber dem Kragen zu prüfen.

2. Maschine nach Anspruch 1 und umfassend ein erstes Trägerelement (16) für mehrere becherförmige Körper (2), das die becherförmigen Körper (2) von der Gießstation (S1) zur ersten Kontrollstation (S2) übergibt, indem sie entlang einer Richtung translatorisch bewegt werden, die im Wesentlichen zu ihrer Längsachse (3) senkrecht ist.

3. Maschine nach einem der vorhergehenden Ansprüche und umfassend ein zweites Trägerelement (21) für mehrere becherförmige Körper (2), das die becherförmigen Körper (2) von der ersten Übergabestation (S3) zur zweiten Kontrollstation (S4) übergibt, indem sie in einer Richtung translatorisch bewegt werden, die im Wesentlichen zu ihrer Längsachse (3) senkrecht ist.

4. Maschine nach Anspruch 3, wobei das zweite Trägerelement (21) eine Luftansaug- und Luftblasvorrichtung umfasst; wobei der Blaskreislauf stromabwärts der zweiten Kontrollstation (S4) aktiviert wird, um eine selektive Ausmusterung der becherförmigen Körper (2), die nicht konform waren, zu erzielen.

5. Maschine nach den Ansprüchen 2 und 3, wobei das erste Trägerelement (16) die becherförmigen Körper (2) in dem Bereich der ersten Übergabestation (S3) zum zweiten Trägerelement (21) übergibt, indem sie in einer Richtung zugeführt werden, die im Wesentlichen zu ihrer Längsachse (3) parallel ist.

6. Maschine nach einem der vorhergehenden Ansprüche und umfassend eine zweite Übergabestation (S5), die stromabwärts der zweiten Kontrollstation (S4) angeordnet ist und einen Arm umfasst, der die Ausrichtung der einzelnen becherförmigen Körper (2) ändert, indem sie um 90° gedreht werden, und sie anschließend in Ablagen (35) übergibt, die auf einer Fördereinrichtung zugeführt werden.

7. Maschine nach einem der vorhergehenden Ansprüche, wenn von Anspruch 2 abhängig, und umfassend ein Bewegungssystem (17) für das Trägerelement (16), das sich entlang eines geradlinigen Weges ausbildet und eine Transportfördereinrichtung (18) umfasst, die das Trägerelement (16) zwischen zwei Extrempositionen bewegt; wobei eine erste Extremposition sich in dem Bereich der Gießstation (S1) befindet und eine zweite Extremposition sich in dem Bereich der ersten Übergabestation (S3) befindet.

8. Maschine nach Anspruch 7, wobei die erste Kontrollstation (S2) und die zweite Kontrollstation (S4) entlang des Bewegungssystems (17) auf gegenüberliegenden Seiten des Bewegungssystems (17) angeordnet sind.

9. Maschine nach einem der vorhergehenden Ansprüche, wenn von Anspruch 2 abhängig, wobei das erste Trägerelement (16) mehrere becherförmige Körper (2) trägt, die in mehreren Reihen (R₁-R₈) angeordnet sind; wobei die erste Kontrollstation (S2) eine optische Kontrollvorrichtung (26) umfasst, die mit einer Anzahl optischer Vorrichtungen (27) versehen ist, die derart ausgerichtet sind, dass die Kontrolle aller becherförmigen Körper (2) einer selben Reihe (R₁-R₈) gleichzeitig ausgeführt wird.

10. Maschine nach einem der vorhergehenden Ansprüche, wenn von Anspruch 3 abhängig, wobei das zweite Trägerelement (21) mehrere becherförmige Körper (2) trägt, die in mehreren Reihen (R'₁-R'₈) angeordnet sind; wobei die zweite Kontrollstation (S4) eine optische Kontrollvorrichtung (33) umfasst, die mit einer Anzahl optischer Vorrichtungen (34) versehen ist, die derart ausgerichtet sind, dass die Kontrolle aller becherförmigen Körper (2) einer selben Reihe (R'₁-R'₈) gleichzeitig ausgeführt wird.

11. Maschine nach Anspruch 10, wobei die Anzahl der optischen Vorrichtungen (34) die Hälfte der Anzahl der becherförmigen Körper (2) beträgt, die jede Reihe (R'₁-R'₈) bilden; und wobei jede optische Vorrichtung (34) dem zweiten Trägerelement (21) direkt zugewandt ist, sie zwischen zwei aufeinanderfolgend angeordneten becherförmigen Körpern (2) eingefügt ist und mit zwei reflektierenden Elementen, insbesondere zwei Spiegeln, zusammenwirkt, derart, dass die Kontrolle der beiden aufeinanderfolgend angeordneten becherförmigen Körper (2) gleichzeitig ausgeführt wird.

12. Verfahren zur Produktion von Kapseln (1) für Raucherzeugnisse, insbesondere für Filter, die ausgelegt sind, eine Flüssigkeit zu enthalten, die beim Kühlen des Rauchs verwendet werden soll; wobei jede Kapsel (1) einen becherförmigen Körper (2) umfasst, der durch eine Seitenwand (4) und an einem Ende durch eine Bodenwand (5) definiert ist; wobei die Seitenwand (4) eine Längsachse (3) aufweist und mit der Bodenwand (5) ein Fach (6) begrenzt, das zum Enthalten einer vorgegebenen Menge an Flüssigkeit geeignet ist; wobei die Kapsel (1) einen Abschnitt der Seitenwand (4) im Bereich des Endes gegenüber der Bodenwand (5) umfasst, der einen Kragen definiert; wobei das Verfahren der Reihe nach vorsieht:
- einen Gießformschritt, um die becherförmigen Körper (2) zu formen;
- einen ersten Kontrollschritt, um die Konformität des Kragens oder des Abschlussendes der Seitenwand (4) gegenüber dem Kragen zu prüfen;
- einen ersten Übergabeschritt, um die becherförmigen Körper (2) zu übergeben, wobei die becherförmigen Körper (2) entlang ihrer Längsachse (3) translatorisch bewegt werden, um zu ermöglichen, dass ein zweiter Abschnitt des becherförmigen Körpers (2) geprüft wird; und
- einen zweiten Kontrollschritt, um die Konformität des Abschlussendes der Seitenwand (4) gegenüber dem Kragen oder des Kragens zu prüfen.

13. Verfahren nach Anspruch 12 und umfassend den weiteren Schritt des Übergebens der becherförmigen Körper (2), indem sie in einer Richtung zugeführt werden, die im Wesentlichen zu ihrer Längsachse (3) senkrecht ist, zwischen dem Gießformschritt der becherförmigen Körper (2) und dem ersten Kontrollschritt.

14. Verfahren nach Anspruch 12 oder 13 und umfassend den weiteren Schritt des Übergebens der becherförmigen Körper (2), indem sie in einer Richtung zugeführt werden, die im Wesentlichen zu ihrer Längsachse (3) parallel ist, während des ersten Übergabeschritts.

15. Verfahren nach einem der Ansprüche von 12 bis 14 und umfassend den weiteren Schritt des Übergebens der becherförmigen Körper (2), indem sie in einer Richtung zugeführt werden, die im Wesentlichen zu ihrer Längsachse (3) senkrecht ist, zwischen dem ersten Übergabeschritt und dem zweiten Kontrollschritt.

16. Verfahren nach einem der Ansprüche von 12 bis 15 und umfassend anschließend an den zweiten Kontrollschritt die weiteren Schritte des Übergebens der becherförmigen Körper (2), indem sie um 90° gedreht werden, und ihres Übergebens in Ablagen (35), die durch eine Fördereinrichtung zugeführt werden.

17. Verfahren nach einem der Ansprüche von 12 bis 16 und umfassend anschließend an den zweiten Kontrollschritt den weiteren Schritt des Erzielen einer selektiven Ausmusterung nicht konformer, becherförmiger Körper (2).

## Revendications

1. Machine de fabrication (10) pour la production de capsules (1) pour des articles à fumer, notamment pour des filtres, conçus pour contenir un liquide à utiliser pour refroidir la fumée ; dans laquelle chaque capsule (1) comprend un corps en forme de coupelle (2), qui est défini par une paroi de côté (4) et, au niveau d'une extrémité, par une paroi de dessous (5) ; la paroi de côté (4) a un axe longitudinal (3) et délimite, avec la paroi de dessous (5), un compartiment (6), qui est approprié pour contenir une quantité prédéterminée de liquide ; la capsule (1) comprenant une portion de la paroi de côté (4) au niveau de l'extrémité opposée à la paroi de dessous (5), qui définit un collier; la machine de fabrication (10) comprend :
- une station de moulage (S1) pour les corps en forme de coupelle (2) ;
- une première station de commande (S2), qui est agencée en aval de la station de moulage (S1) pour vérifier la conformité du collier ou de l'extrémité terminale de la paroi de côté (4) opposée au collier;
- une première station de transfert (S3) pour les corps en forme de coupelle (2) agencés en aval de la première station de commande (S2), où les corps en forme de coupelle (2) sont translatés selon leur axe longitudinal (3) de façon à permettre d'examiner une deuxième portion du corps en forme de coupelle (2) ; et
- une deuxième station de commande (S4), qui est agencée en aval de la station de transfert (S3) pour vérifier la conformité du collier ou de l'extrémité terminale de la paroi de côté (4) opposée au collier.

2. Machine selon la revendication 1 et comprenant un premier organe de support (16) pour une pluralité de corps en forme de coupelle (2), qui transfère les corps en forme de coupelle (2) de la station de moulage (S1) à la première station de commande (S2) en les translatant suivant une direction qui est sensiblement orthogonale à leur axe longitudinal (3).

3. Machine selon l'une des revendications précédentes et comprenant un deuxième organe de support (21) pour une pluralité de corps en forme de coupelle (2), qui transfère les corps en forme de coupelle (2) de la première station de transfert (S3) à la deuxième station de commande (S4) en les translatant dans une direction sensiblement orthogonale à leur axe longitudinal (3).

4. Machine selon la revendication 3, dans laquelle le deuxième organe de support (21) comprend un dispositif d'aspiration et de soufflage d'air ; dans laquelle le circuit de soufflage est activé en aval de la deuxième station de commande (S4) pour obtenir un rejet sélectif des corps en forme de coupelle (2) qui n'étaient pas conformes.

5. Machine selon les revendications 2 et 3, dans laquelle le premier organe de support (16) transfère les corps en forme de coupelle (2) au deuxième organe de support (21) dans la zone de la première station de transfert (S3) en les approvisionnant dans une direction sensiblement parallèle à leur axe longitudinal (3).

6. Machine selon l'une des revendications précédentes et comprenant une deuxième station de transfert (S5), qui est agencée en aval de la deuxième station de commande (S4) et comprend un bras, qui change l'orientation des seuls corps en forme de coupelle (2) en les tournant de 90° et les transfère ensuite dans des plateaux (35) approvisionnés sur un convoyeur.

7. Machine selon l'une des revendications précédentes, lorsqu'elle dépend de la revendication 2, et comprenant un système de déplacement (17) pour l'organe de support (16), qui se présente le long d'un trajet droit et comprend un convoyeur de transport (18), qui déplace l'organe de support (16) entre deux positions extrêmes; dans laquelle, une première position extrême est dans la zone de la station de moulage (S1) et une deuxième position extrême est dans la zone de la première station de transfert (S3).

8. Machine selon la revendication 7, dans laquelle la première station de commande (S2) et la deuxième station de commande (S4) sont agencées le long dudit système de déplacement (17), sur des côtés opposés dudit système de déplacement (17).

9. Machine selon l'une des revendications précédentes lorsqu'elle dépend de la revendication 2, dans laquelle le premier organe de support (16) supporte une pluralité de corps en forme de coupelle (2) agencés en plusieurs rangées (R₁ à R₈) ; dans laquelle la première station de commande (S2) comprend un dispositif de commande optique (26) pourvu d'un nombre de dispositifs optiques (27), qui sont alignés de façon à réaliser simultanément la commande de tous les corps en forme de coupelle (2) d'une même rangée (R₁ à R₈).

10. Machine selon l'une des revendications précédentes, lorsqu'elle dépend de la revendication 3, dans laquelle le deuxième organe de support (21) supporte une pluralité de corps en forme de coupelle (2) agencés en plusieurs rangées (R'₁ à R'₈) ; dans laquelle la deuxième station de commande (S4) comprend un dispositif de commande optique (33) pourvu d'un nombre de dispositifs optiques (34), qui sont alignés de façon à réaliser simultanément la commande de tous les corps en forme de coupelle (2) d'une même rangée (R'₁ à R'₈).

11. Machine selon la revendication 10, dans laquelle le nombre de dispositifs optiques (34) est la moitié du nombre des corps en forme de coupelle (2) qui constituent chaque rangée (R'₁ à R'₈) ; et dans laquelle chaque dispositif optique (34) est directement en regard du deuxième organe de support (21), il est interposé entre deux corps en forme de coupelle (2) agencés à la suite et coopère avec deux éléments réfléchissants, notamment deux miroirs, de façon à réaliser simultanément la commande des deux corps en forme de coupelle (2) agencés à la suite.

12. Procédé pour la production de capsules (1) pour des articles à fumer, notamment pour des filtres, conçus pour contenir un liquide à utiliser pour refroidir la fumée ; dans lequel chaque capsule (1) comprend un corps en forme de coupelle (2), qui est défini par une paroi de côté (4) et, au niveau d'une extrémité, par une paroi de dessous (5) ; la paroi de côté (4) a un axe longitudinal (3) et délimite, avec la paroi de dessous (5), un compartiment (6), qui est approprié pour contenir une quantité prédéterminée de liquide ; la capsule (1) comprenant une portion de la paroi de côté (4) dans la zone de l'extrémité opposée à la paroi de dessous (5) qui définit un collier ; le procédé fournit dans l'ordre :
- une étape de moulage pour mouler les corps en forme de coupelle (2) ;
- une première étape de commande pour vérifier la conformité du collier ou de l'extrémité terminale de la paroi de côté (4) opposée au collier;
- une première étape de transfert pour transférer les corps en forme de coupelle (2), dans lequel les corps en forme de coupelle (2) sont translatés selon leur axe longitudinal (3) de façon à permettre d'examiner une deuxième portion du corps en forme de coupelle (2) ; et
- une deuxième étape de commande pour vérifier la conformité de l'extrémité terminale de la paroi de côté (4) opposée au collier ou du collier.

13. Procédé selon la revendication 12, et comprenant l'étape supplémentaire de transfert des corps en forme de coupelle (2), en les approvisionnant dans une direction qui est sensiblement orthogonale à leur axe longitudinal (3), entre l'étape de moulage des corps en forme de coupelle (2) et la première étape de commande.

14. Procédé selon la revendication 12 ou 13 et comprenant l'étape supplémentaire de transfert des corps en forme de coupelle (2), en les approvisionnant dans une direction qui est sensiblement parallèle à leur axe longitudinal (3), pendant la première étape de transfert.

15. Procédé selon l'une quelconque des revendications 12 à 14, et comprenant l'étape supplémentaire de transfert des corps en forme de coupelle (2), en les approvisionnant dans une direction sensiblement orthogonale à leur axe longitudinal (3) entre la première étape de transfert et la deuxième étape de commande.

16. Procédé selon l'une quelconque des revendications 12 à 15 et comprenant les étapes supplémentaires, ultérieures à la deuxième étape de commande, de transfert des corps en forme de coupelle (2) en les tournant de 90° et de leur transfert dans des plateaux (35) approvisionnés par un convoyeur.

17. Procédé selon l'une quelconque des revendications 12 à 16 et comprenant l'étape supplémentaire, ultérieure à la deuxième étape de commande, d'obtention d'un rejet sélectif de corps en forme de coupelle (2) non conformes.
